# FASCICULE DE BREVET EUROPEEN

(11) **EP 4 185 457 B1**
(45) Date de publication et mention de la délivrance du brevet: **04.09.2024**
(21) Numéro de dépôt: 21746080.7
(22) Date de dépôt: 07.07.2021
(51) Int. Cl.: B29D 30/38, B29B 15/08, B29B 15/12, B29B 15/14, B21F 9/00

(54) **TRAITEMENT THERMIQUE D'UN ÉLÉMENT DE RENFORT**
WÄRMEBEHANDLUNG EINES VERSTÄRKUNGSELEMENTS
HEAT TREATMENT OF A REINFORCEMENT ELEMENT

(30) Priorité: 24.07.2020 FR 2007792
(43) Date de publication de la demande: 31.05.2023
(73) Titulaire: Compagnie Générale des Etablissements Michelin, 63000 Clermont-Ferrand (FR)
(72) Inventeur: BENART, Sarah, 63040 Clermont-Ferrand-Cedex 9 (FR); DAVAYAT, Gaëtan, 63040 Clermont-Ferrand-Cedex 9 (FR); MORISOT, Pierre, 63040 Clermont-Ferrand-Cedex 9 (FR); PINAUT, Rémi, 63040 Clermont-Ferrand-Cedex 9 (FR)
(74) Mandataire: M.F.P. Michelin
(86) Numéro de dépôt international: PCT/FR2021/051255
(87) Numéro de publication internationale: WO 2022/018341

(56) Documents cités:
- EP-A1- 1 486 319
- DE-T5- 112014 006 853
- FR-A1- 3 041 282
- US-A1- 2010 168 306
- US-A1- 2016 281 297

## Description

### Domaine technique de l'invention

La présente invention est relative au domaine des procédés de mise en oeuvre de renforts métalliques, en particulier de renforts métalliques utilisés dans les nappes renforcées pour bandages pneumatiques, ainsi qu'aux renforts obtenus par de tels procédés.

### Art antérieur

Un pneumatique est obtenu par l'assemblage puis la cuisson d'une ébauche de pneumatique. L'ébauche de pneumatique comprend une pluralité de composants élastomériques crus, prenant la forme de nappes. Un tronçon longitudinal d'une nappe est disposé circonférentiellement sur l'ébauche de pneumatique en cours de fabrication, puis les deux extrémités du tronçon sont aboutées.

Une nappe est éventuellement renforcée par des renforts métalliques, lesdits renforts étant majoritairement des éléments filaires constitués d'un monofilament, ou bien d'un assemblage de monofilaments. Par la suite, on emploiera indifféremment les expressions « nappe renforcée » ou « composite élastomérique ». Les renforts métalliques sont généralement disposés à l'intérieur de la nappe, dans un même plan lorsque la nappe est posée à plat, parallèlement les uns aux autres et espacés régulièrement. Ils peuvent également être inclinés, de telle sorte qu'ils forment un angle donné avec la direction longitudinale de la nappe.

La fabrication d'une nappe renforcée comprend notamment des étapes d'enroulage et de stockage d'une pluralité de renforts métalliques sur une pluralité de bobines. Un tour de monofilament enroulé sur une bobine est appelé une spire. L'ensemble des spires est appelé un enroulement. Puis, la fabrication de la nappe renforcée comprend une étape pendant laquelle cette pluralité de renforts métalliques est déroulée de la pluralité de bobines. Les renforts métalliques sont ensuite disposés, comme décrit précédemment, parallèlement à la direction longitudinale de la nappe en cours de fabrication, puis noyés dans une couche de gomme crue selon un procédé de calandrage ou d'extrusion. Une nappe renforcée comprenant des renforts métalliques formant un angle donné avec la direction longitudinale, est obtenue en découpant selon un biseau de l'angle donné et à intervalle régulier une nappe obtenue à l'issue de l'étape de noyage, puis en assemblant les découpes par leurs bords non découpés.

Le stockage du renfort métallique sur une bobine provoque une déformation du renfort métallique. En effet, la trajectoire formée par le renfort métallique, déroulé de la bobine à l'issue du stockage et libre de toute contrainte externe, est légèrement curviligne. Le défaut de rectitude, mesuré selon une méthode qui sera décrite dans la suite de la description, est appelé le cintre.

Le cintre d'une pluralité de renforts métalliques a pour conséquence des défauts de forme de la nappe renforcée dans laquelle le ou les éléments filaires sont disposés, telles des ondulations, des vrilles, du rebiquage, un découpage en tronçons de la nappe imprécis, ou encore une disposition et un aboutage difficile d'un tronçon de la nappe sur l'ébauche de bandage pneumatique.

Si la pose manuelle d'une nappe présentant des défauts de forme est possible, elle n'est envisageable que pour la fabrication d'un nombre limité de bandages pneumatiques en raison de sa mauvaise productivité industrielle. En mode automatisé, la pose d'une nappe présentant des défauts de forme au-delà d'un certain seuil s'avère difficile voire impossible.

Pour résoudre ce problème, le document WO2018/141566 propose de corriger les défauts de planéité d'une nappe renforcée en opérant sur celle-ci une déformation plastique au moyen d'un dispositif de correction comprenant un cylindre.

Cependant, plus le renfort métallique est enroulé proche du moyeu de la bobine, plus le cintre consécutif au stockage du renfort métallique croît. Autrement dit, le cintre consécutif au stockage n'est pas constant le long du renfort métallique du fait du remplissage de la bobine, tandis que le contre-cintrage imprime au fil un rayon courbure de signe opposé mais constant. Par conséquent, si le contre-cintrage permet bien d'atténuer le cintre moyen du renfort métallique et le cintre du renfort métallique proche du moyeu de la bobine, il peut amplifier le cintre du renfort métallique éloigné du moyeu.

Le document WO2019/081862 propose des bobines de stockage présentant un diamètre de moyeu plus important, de manière à atténuer l'écart de rayon de courbure de l'élément de renfort entre les parties de cet élément stockées proche du moyeu et celles stockées en périphérie. Bien que présentant de bons résultats, cette solution impose d'utiliser des bobines non standard.

La demande EP 3 620 543 décrit un câble obtenu par un procédé comprenant des étapes de tréfilage, de traitement thermique, et d'enroulage sur un moyen de stockage, ce câble présentant pour une portion de 400 mm un écart à la verticale inférieur ou égal à 30 mm après avoir été enroulé entre 6 mois et un an. Le traitement thermique répond en particulier à la relation (A) T+13,67.ln(t)+2,7.tau supérieure ou égale à 425, avec T représentant la température de chauffe en K, t le temps de chauffe en seconde, et tau la tension appliquée au câble en kgf. Le traitement thermique est appliqué spécifiquement au câble entre l'étape de tréfilage et l'étape d'enroulage. Cependant, et comme montré dans les exemples, de nombreux câbles ayant été soumis à un traitement thermique répondant à la condition (A) présentent un écart à la verticale (« straightness » selon la terminologie de la demande) bien supérieur à 30 mm après 7 mois d'enroulement. Ainsi, la relation entre la condition (A) et la diminution de cintre n'est pas très claire.

Un autre procédé de fabrication d'une nappe renforcée comprenant une composition élastomérique et au moins un élément de renfort métallique est décrit dans la demande EP 1486319 A1.

Par conséquent demeure le besoin d'une solution simple pouvant être appliquée sur le renfort avant son incorporation dans une nappe renforcée par calandrage ou extrusion, permettant d'assurer une bonne planéité de cette nappe et ainsi de faciliter sa mise en oeuvre industrielle, en particulier pour la fabrication de bandages pneumatiques.

Au cours de leurs recherches, la Demanderesse a découvert un traitement pouvant être appliqué sur un renfort métallique entre son moyen de stockage et l'étape d'incorporation dans une composition élastomérique permettant d'assurer un cintre suffisamment faible pour assurer une bonne planéité de nappe, sans qu'il soit nécessaire de mesurer le cintre pris par le renfort lors de son stockage, que ce cintre soit dû au moyen de stockage ou à la durée du stockage. Grâce à l'invention, des éléments de renforts provenant de sources diverses, ayant ou non reçu un traitement anti-cintre avant stockage peuvent être utilisés indistinctement.

### Description détaillée de l'invention

L'invention concerne un procédé de fabrication d'une nappe renforcée comprenant une composition élastomérique et au moins un élément de renfort métallique, dans lequel ledit renfort est soumis au moins aux étapes successives suivantes :
a. On déroule le renfort depuis un moyen de stockage sur lequel le renfort est enroulé ;
b. On traite thermiquement le renfort issu de l'étape de déroulage dans des conditions de température et de durée telles que T+13,7.ln(t)>175, T représentant la température de traitement en °C et t la durée pendant laquelle le renfort est maintenu à la température T en seconde ;
c. On alimente le renfort issu de l'étape de traitement thermique dans une étape dans laquelle ledit renfort est noyé dans une composition élastomérique.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Étape a) de déroulement du renfort

Le procédé de fabrication d'une nappe renforcée selon l'invention comprend une étape lors de laquelle on déroule le renfort depuis un moyen de stockage sur lequel le renfort est enroulé.

Le moyen de stockage est le plus souvent une bobine de stockage comprenant un moyeu et deux flasques. La dimension de la bobine dépend du renfort stocké et représente un compromis entre la quantité de renfort dont on souhaite disposer et les contraintes liées à l'utilisation d'un procédé ou au transport. Les dimensions sont standardisées afin de faciliter leur utilisation. Des bobines particulièrement utiles aux besoins de l'invention présentent un diamètre de moyeu compris entre 100 mm et 200 mm.

Le renfort est un renfort métallique. Le renfort métallique peut être un unique élément filaire métallique, c'est-à-dire un monofilament élémentaire métallique. Un tel monofilament élémentaire métallique comprend une âme en acier, éventuellement revêtue d'une ou plusieurs couches d'un revêtement qui peut être métallique et/ou à base d'une composition adhésive non métallique.

Le revêtement métallique comprend un métal choisi parmi le zinc, le cuivre, l'étain, le cobalt et les alliages de ces métaux. Comme exemples d'alliages de ces métaux, on citera le laiton et le bronze. L'acier de l'âme est un acier au carbone comprenant entre 0,1% et 1,2% de carbone en masse, au plus 11% en masse de chrome, moins de 1% en masse de chacun des éléments suivants : manganèse, silicium, aluminium, bore, cobalt, cuivre, molybdène, nickel, niobium, titane, tungstène, vanadium, zirconium, phosphore, soufre, azote, le reste étant constitué de fer et d'impuretés inévitables résultant de l'élaboration. L'acier peut présenter une microstructure perlitique, ferritique, austénitique, bainitique, martensitique ou une microstructure issue d'un mélange de ces microstructures.

Le monofilament élémentaire métallique présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle l'élément de renfort est destiné à être noyé.et un allègement de la matrice ainsi renforcée.

Dans le cas où le monofilament élémentaire métallique présente une section circulaire, le diamètre de ces monofilaments élémentaires métalliques va préférentiellement de 0,05 mm à 0,60 mm.

De manière très préférée, le diamètre de l'élément filaire métallique va de 0,18 à 0,45 mm.

Le renfort métallique peut être un assemblage de plusieurs éléments filaires métalliques, c'est-à-dire de plusieurs monofilaments élémentaires métalliques tels que décrits ci-dessus, assemblés ensemble en hélice, par exemple par câblage ou retordage des monofilaments élémentaires métalliques pour former, par exemple des câbles à couches comprenant plusieurs couches concentriques de monofilaments élémentaires métalliques ou des câbles à torons, chaque toron comprenant plusieurs couches concentriques de monofilaments élémentaires métalliques. De façon optionnelle et comme décrit dans WO2005071157, un tel élément filaire métallique comprend une couche à base d'une composition polymérique, de préférence d'une composition comprenant un élastomère, cette couche étant disposée entre deux couches de monofilaments élémentaires métalliques du câble à couche ou d'un toron du câble à torons.

De manière préférée, on déroule une pluralité de renforts depuis une pluralité de moyens de stockage.

### Étape b) de traitement thermique

Conformément à l'invention, le renfort issu de l'étape de déroulage est traité thermiquement dans une étape b) de traitement thermique, dans des conditions de température et de durée telles que T+13,7.ln(t)>175, T représentant la température de traitement en °C et t la durée pendant laquelle le renfort est maintenu à la température T en seconde ;

La mise en oeuvre de ce traitement thermique sur le renfort permet de réduire le cintre consécutif au stockage du renfort à des valeurs proches voire identiques au cintre du renfort mesuré à l'issue du procédé de fabrication de celui-ci, c'est-à-dire à l'issue du procédé de tréfilage ou d'assemblage, typiquement une valeur de cintre inférieure à 20 mm.

De manière préférée, l'étape b) est réalisée dans des conditions de température et de durée telles que T+28,4.ln(t)<398.

De manière préférée, la durée de traitement thermique est comprise dans un intervalle allant de plus de 0 à moins de 5 s et la température est comprise dans un intervalle allant de plus de 200 à 400°C.

De manière préférée, la durée de traitement de l'étape b) est comprise dans un intervalle allant de plus de 0 à moins de 60 s, préférentiellement de plus de 0 à moins de 20 s, très préférentiellement de plus de 0 à moins de 5 s, et de manière préférée 0 à 2 s.

De manière préférée, la température est comprise dans un intervalle allant de 130 à 400°C.

De manière très préférée, la durée de traitement de l'étape b) est comprise dans un intervalle allant de plus de 0 à moins de 20 s, avec T inférieure ou égale à 300°C si la durée de traitement est inférieure à 2 s, et T-23,8.ln(t)<315 pour une durée de traitement allant de 2 à moins de 20 s. Dans ces conditions, on préserve la résistance mécanique du renfort.

Le traitement thermique peut être mis en oeuvre par tout moyen connu de l'Homme du métier. Le renfort peut être chauffé par conduction, convection, induction, préférentiellement par induction.

Lors du traitement thermique, le renfort défile préférentiellement dans une chambre dans laquelle le moyen de chauffage est appliqué, les dimensions de la chambre et la vitesse de défilement déterminant la durée du traitement thermique.

La durée du traitement thermique du procédé selon l'invention permet de maintenir les vitesses de calandrages couramment utilisées dans les procédés industriels, en particulier les procédés de fabrication de bandages pneumatiques.

Dans le cas d'une pluralité de renforts, chaque renfort peut être traité individuellement, ou bien la pluralité de renforts peut être traitée collectivement. De manière préférée, la pluralité de renforts est traitée collectivement. Cet arrangement préféré permet une mise en oeuvre industrielle particulièrement efficace en traitant collectivement des renforts d'origine diverse et de cintres variés avec un coût réduit par la minimisation du nombre d'équipements de traitement.

### Étape c) d'alimentation dans une étape de calandrage

A l'issue de l'étape de traitement thermique, le renfort alimente une étape dans laquelle il est noyé dans une composition élastomérique afin d'obtenir une nappe renforcée.

De préférence, l'élément de renfort métallique n'est enrobé d'aucune composition polymérique préalablement à l'étape c).

De préférence, la composition élastomérique est à base d'une composition comprenant au moins un élastomère et au moins une charge.

De préférence, la composition comprend un élastomère, de préférence un élastomère diénique. Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non). Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère diénique est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères, et très préférentiellement choisi parmi le caoutchouc naturel et un polyisoprène de synthèse du type cis-1,4.

De manière préférée, la composition élastomérique utilisée dans l'étape c) comprend majoritairement un élastomère diénique choisi dans le groupe constitué par le caoutchouc naturel, le polyisoprène de synthèse ou un mélange de ces derniers.

La composition peut comporter un seul ou plusieurs élastomère(s) diénique(s), également tout ou partie des additifs habituellement utilisés dans les matrices destinées à la fabrication de bandages, tels que par exemple des charges comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en oeuvre (processabilité) des compositions à l'état cru, des résines tackifiantes, des agents anti-réversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la composition élastomérique est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m2/g, de préférence de 30 à 400 m2/g.

L'homme de l'art saura, à la lumière de la présente description, ajuster la formulation des compositions de caoutchouc afin d'atteindre les niveaux de propriétés (notamment module d'élasticité) souhaités, et adapter la formulation à l'application spécifique envisagée.

De préférence, chaque matrice polymérique présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Dans le cas d'une pluralité de renforts et de manière préférée, en amont ou en aval de l'étape b) de traitement, la pluralité de renforts est disposée parallèlement les uns aux autres. La pluralité de renforts ainsi disposée est alors noyée dans la composition élastomérique.

L'étape dans laquelle le renfort ou la pluralité de renfort est noyé dans la composition élastomérique peut être réalisée par toute méthode connue de l'Homme du métier, par exemple par extrusion ou calandrage.

L'étape dans laquelle le renfort ou la pluralité de renfort est noyé dans une composition élastomérique peut comprendre les étapes suivantes :
- Réaliser deux couches de la composition élastomérique,
- Prendre le ou les éléments de renfort en sandwich dans les deux couches en le(s) déposant entre les deux couches,
- Le cas échéant cuire la nappe renforcée.

Alternativement, le renfort ou la pluralité de renfort est noyé dans une composition élastomérique en déposant le renfort ou la pluralité de renfort sur une portion d'une couche de composition élastomérique, la couche étant ensuite repliée sur elle-même pour couvrir le renfort ou la pluralité de renfort qui est ainsi pris en sandwich sur toute sa longueur ou une partie de sa longueur.

De manière préférée, les étapes a) à c) ont lieu de manières continues, l'étape b) étant réalisée sur une portion de renfort défilant continûment, le renfort défilant préférentiellement à une vitesse comprise entre 5 et 120 m/min, préférentiellement entre 10 et 80 m/min.

Le procédé selon l'invention permet de mettre en nappe des renforts d'origine diverse ayant pu prendre des cintres variés lors de leur fabrication et/ou leur stockage sur bobine, et facilite ainsi grandement la gestion des alimentations en renfort et la fabrication de nappes renforcées. La nappe renforcée obtenue, comprenant au moins un élément de renfort, présente une planéité compatible avec son incorporation dans un procédé de fabrication d'une ébauche de pneumatique.

La fabrication d'une ébauche de pneumatique comprend une étape de fabrication d'au moins une nappe renforcée selon le procédé de l'invention. Le procédé comprend ensuite au moins une étape pendant laquelle la ou les nappes renforcées sont enroulées sur un tambour de confection de manière à obtenir une ébauche de pneumatique. Plus précisément, les nappes renforcées sont disposées circulairement sur l'ébauche de pneumatique en cours de fabrication puis les deux extrémités de la nappe sont aboutées.

### Description des figures

[Fig 1] La figure 1 montre la mesure du cintre C d'un échantillon de renfort 33.
[Fig 2] La figure 2 est une représentation schématique d'un procédé selon l'invention. On déroule une pluralité de renforts (30) depuis une pluralité de moyens de stockages, ici des bobines (20). La pluralité de renforts est disposée parallèlement les uns aux autres avant d'être traités dans une étape de traitement thermique (40), puis alimente ensuite une étape (50) dans laquelle la pluralité de renforts est noyée dans une composition élastomérique afin d'obtenir une nappe renforcée (60).

### Exemple

### Mesures et tests comparatifs

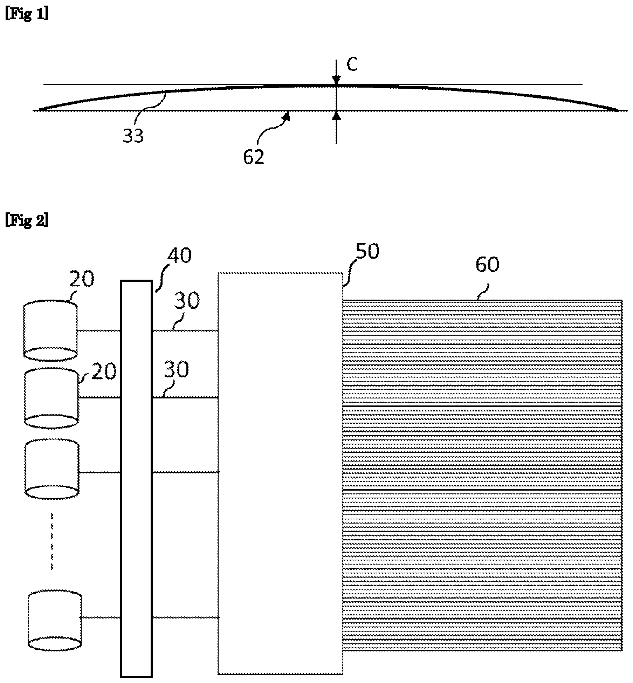

Afin de mesurer le cintre du renfort à l'issue de son stockage et après traitement dans l'étape b) du procédé selon l'invention, on mesure la flèche de l'arc formé par un échantillon du renfort de la manière suivante :
- On découpe un échantillon (33) de renfort d'une longueur de 60 mm,
- On mesure le cintre C de l'échantillon de renfort (33) comme l'illustre la figure 1, l'échantillon de renfort (33), posé sur un plan horizontal, formant sensiblement un arc, l'arc étant caractérisé par sa flèche, ou autrement dit, la distance maximale entre l'arc et la corde (62) qui le sous-tend, perpendiculairement à la corde.

On réalise trois mesures de cintres :
- après tréfilage ou assemblage, juste avant d'enrouler le renfort sur une bobine de type « B80 » en vue de son stockage,
- après stockage, sur un échantillon de renfort prélevé proche du moyeu de la bobine, c'est-à-dire un échantillon ayant subi le plus fort cintrage lors de l'enroulement,
- après traitement thermique (le cas échéant), afin d'évaluer la réduction de cintre préalablement à l'étape de noyage du câble dans une matrice élastomérique.

Deux renforts sont évalués. Le premier, noté « 1.32 », est un monofilament métallique de diamètre 0,32 mm. Le second, noté « 9.35 » est un assemblage à deux couches de monofilaments métalliques de diamètre 0,35 mm, de structure 2+7 et de pas 7,7/15,4.

Ces deux renforts sont couramment utilisés pour le renforcement de nappes de bandages pneumatiques.

Les bobines de stockage « B80 » sont des bobines de type standard, présentant un diamètre au moyeu de 118 mm.

Le « rebiquage nappe » est estimé de manière qualitative en sortie de l'étape de noyage dans une matrice élastomérique. On découpe une largeur de nappe que l'on dispose sur une surface plane et on évalue la manière dont remontent les coins de nappe. Une évaluation « - » indique que la nappe peut être incorporée dans un bandage pneumatique moyennant une modification de réglage des machines de confection du bandage pneumatique ou une intervention manuelle, une évaluation « -- » indique l'impossibilité d'incorporer la nappe dans un bandage pneumatique et une évaluation « + » indique que la nappe peut être incorporée dans un bandage pneumatique sans ajustement des réglages des machines de confection.

Le tableau 1 rassemble les tests réalisés.

**[Tableau 1]**

| **Renfort** | **Cintre avant stockage** | **Stockage** | **Cintre après stockage (mm)** | **Condition du traitement thermique** | | | **Cintre après traitement thermique (mm)** | **Évaluation rebiquage nappe** |
|---|---|---|---|---|---|---|---|---|
| | | | | **T (°C)** | **temps (s)** | **Condition T+13,7,ln(t)** | | |
| 1.32 | **15** | 6 mois | 140 | Pas de traitement | | | | -- |
| 1.32 | **15** | 6 mois | 140 | 270 | 1 | 270 | 15 | + |
| 1.32 | **15** | 6 mois | 140 | 270 | 0,5 | 261 | 15 | + |
| 1.32 | **15** | 6 mois | 140 | 150 | 2,5 | 162 | 40 | - |
| 9.35 | **15** | 1 mois | 55 | 220 | 0,5 | 211 | 15 | **+** |
| 9.35 | **15** | 1 mois | 55 | 120 | 2,0 | 130 | 50 | - |
| 9.35 | **15** | 1 mois | 55 | 140 | 5..0 | 162 | 40 | - |

On note que la mise en oeuvre du procédé selon l'invention permet d'obtenir des nappes renforcées qui peuvent être incorporées dans un article de caoutchouc, ici un bandage pneumatique, sans qu'il soit nécessaire d'ajuster les réglages des machines d'assemblage. En particulier, l'application du traitement thermique permet de revenir au cintre initial obtenu à l'issue du procédé de fabrication du renfort (tréfilage ou assemblage).

## Revendications

1. Procédé de fabrication d'une nappe renforcée comprenant une composition élastomérique et au moins un élément de renfort métallique, dans lequel ledit renfort est soumis au moins aux étapes successives suivantes :
a. On déroule le renfort depuis un moyen de stockage sur lequel le renfort est enroulé ;
b. On traite thermiquement le renfort issu de l'étape de déroulage dans des conditions de température et de durée telles que T+13,7.ln(t)>175, T représentant la température de traitement en °C et t la durée pendant laquelle le renfort est maintenu à la température T en seconde ;
c. On alimente le renfort issu de l'étape de traitement thermique dans une étape dans laquelle ledit renfort est noyé dans une composition élastomérique afin d'obtenir une nappe renforcée.

2. Procédé selon la revendication précédente dans lequel l'étape b) est réalisée dans des conditions de température et de durée telles que T+28,4.ln(t)<398.

3. Procédé selon l'une quelconque des revendications précédentes dans lequel la durée de traitement de l'étape b) est comprise dans un intervalle allant de plus de 0 à moins de 60 s, préférentiellement de plus de 0 à moins de 20 s, très préférentiellement de plus de 0 à moins de 5 s, et de manière préférée 0 à 2 s.

4. Procédé selon la revendication précédente dans lequel la température est comprise dans un intervalle allant de 130 à 400°C.

5. Procédé selon l'une quelconque des revendications 1 à 2, dans lequel la durée de traitement thermique est comprise dans un intervalle allant de plus de 0 à moins de 5 s et la température est comprise dans un intervalle allant de plus de 200 à 400°C.

6. Procédé selon la revendication 1 dans lequel la durée de traitement de l'étape b) est comprise dans un intervalle allant de plus de 0 à moins de 20 s, avec T inférieure ou égale à 300°C si la durée de traitement est inférieure à 2 s, et T-23,8.ln(t)<315 pour une durée de traitement allant de 2 à moins de 20 s.

7. Procédé selon l'une quelconque des revendications précédentes dans lequel les étapes a) à c) ont lieu de manières continues, l'étape b) étant réalisée sur une portion de renfort défilant continûment.

8. Procédé selon la revendication précédente dans lequel le renfort défile à une vitesse comprise entre 5 et 120 m/min, préférentiellement entre 10 et 80 m/min.

9. Procédé selon l'une quelconque des revendications précédentes dans lequel le renfort métallique est un unique élément filaire métallique.

10. Procédé selon l'une quelconque des revendications 1 à 8 dans lequel le renfort métallique est un assemblage de plusieurs éléments filaires métalliques assemblés ensemble en hélice.

11. Procédé selon l'une quelconque des revendications 9 à 10, dans lequel le diamètre de l'élément filaire métallique va de 0,05 mm à 0,60 mm.

12. Procédé selon la revendication 9 dans lequel le diamètre de l'élément filaire métallique va de 0,18 à 0,45 mm.

13. Procédé selon l'une quelconque des revendications précédentes dans lequel l'élément de renfort métallique n'est enrobé d'aucune composition polymérique préalablement à l'étape c).

14. Procédé selon l'une quelconque des revendications précédentes dans lequel la composition élastomérique utilisée dans l'étape c) comprend majoritairement un élastomère diénique choisi dans le groupe constitué par le caoutchouc naturel, le polyisoprène de synthèse ou un mélange de ces derniers.

15. Procédé selon l'une quelconque des revendications précédentes dans lequel :
a. On déroule une pluralité de renforts depuis une pluralité de moyens de stockage sur lequel le renfort est enroulé ;
b. On traite thermiquement collectivement la pluralité de renforts ;
c. On alimente la pluralité de renforts issue de l'étape de traitement thermique dans une étape dans laquelle ladite pluralité de renforts est noyée dans une composition élastomérique afin d'obtenir une nappe renforcée.

## Patentansprüche

1. Verfahren zur Herstellung einer verstärkten Gürtellage, die eine elastomerartige Zusammensetzung und mindestens ein metallisches Verstärkungselement umfasst, wobei die Verstärkung nacheinander zumindest den folgenden Schritten unterzogen wird:
a. Abwickeln der Verstärkung von einem Lagerungsmittel, auf welchem die Verstärkung aufgewickelt ist;
b. Wärmebehandeln der Verstärkung, welche aus dem Schritt des Abwickelns stammt, unter Bedingungen der Temperatur und der Zeitdauer, die derart sind, dass T+13,7.ln(t)>175, wobei T für die Behandlungstemperatur in °C und t für die Zeitdauer in Sekunden steht, über welche die Verstärkung bei der Temperatur T gehalten wird;
c. Zuführen der Verstärkung, welche aus dem Schritt des Wärmebehandeln stammt, zu einem Schritt, in welchem die Verstärkung in eine elastomerartige Zusammensetzung eingetaucht wird, um eine verstärkte Gürtellage zu erhalten.

2. Verfahren nach dem vorhergehenden Schritt, wobei der Schritt b) unter Bedingungen der Temperatur und der Zeitdauer durchgeführt wird, die derart sind, dass T+28,4.ln(t)<398.

3. Verfahren nach einem beliebigen der vorhergehenden Ansprüche, wobei die Behandlungsdauer des Schrittes b) in einem Bereich von mehr als 0 bis weniger als 60 s, vorzugsweise von mehr als 0 bis weniger als 20 s, sehr vorzugsweise von mehr als 0 bis 5 s liegt, wobei sie auf bevorzugte Weise 0 bis 2 s beträgt.

4. Verfahren nach dem vorhergehenden Anspruch, wobei die Temperatur in einem Bereich von 130 bis 400 °C liegt.

5. Verfahren nach einem beliebigen der Ansprüche 1 bis 2, wobei die Zeitdauer der Wärmebehandlung in einem Bereich von mehr als 0 bis weniger als 5 s liegt und die Temperatur in einem Bereich von mehr als 200 bis 400 °C liegt.

6. Verfahren nach Anspruch 1, wobei die Behandlungsdauer des Schrittes b) in einem Bereich von mehr als 0 bis weniger als 20 s liegt, mit einem T von kleiner oder gleich 300 °C, wenn die Behandlungsdauer weniger als 2 s beträgt, und T-23,8.ln(t)<315 für eine Behandlungsdauer, die 2 bis weniger als 20 s beträgt.

7. Verfahren nach einem beliebigen der vorhergehenden Ansprüche, wobei die Schritte a) bis c) kontinuierlich erfolgen, wobei der Schritt b) an einem Verstärkungsabschnitt vorgenommen wird, der ununterbrochen durchläuft.

8. Verfahren nach dem vorhergehenden Anspruch, wobei die Verstärkung mit einer Geschwindigkeit zwischen 5 und 120 m/min., vorzugsweise zwischen 10 und 80 m/min., durchläuft.

9. Verfahren nach einem beliebigen der vorhergehenden Ansprüche, wobei es sich bei der metallischen Verstärkung um ein einziges Metalldrahtelement handelt.

10. Verfahren nach einem beliebigen der Ansprüche 1 bis 8, wobei es sich bei der metallischen Verstärkung um eine Anordnung mehrerer Metalldrahtelement handelt, die gemeinsam spiralförmig angeordnet sind.

11. Verfahren nach einem beliebigen der Ansprüche 9 bis 10, wobei der Durchmesser des Metalldrahtelements 0,05 mm bis 0,60 mm beträgt.

12. Verfahren nach Anspruch 9, wobei der Durchmesser des Metalldrahtelements 0,18 mm bis 0,45 mm beträgt.

13. Verfahren nach einem beliebigen der vorhergehenden Ansprüche, wobei das metallische Verstärkungselement im Vorfeld des Schrittes c) keinerlei Umhüllung mit einer polymerartigen Zusammensetzung erfährt.

14. Verfahren nach einem beliebigen der vorhergehenden Ansprüche, wobei die elastomerartige Zusammensetzung, welche im Schritt c) verwendet wird, überwiegend ein Dien-Elastomer umfasst, das aus der Gruppe ausgewählt ist, welche aus natürlichem Kautschuk, synthetischem Polyisopren oder einer Mischung der letzteren besteht.

15. Verfahren nach einem beliebigen der vorhergehenden Ansprüche, wobei:
a. eine Mehrzahl an Verstärkungen von einer Mehrzahl an Lagerungsmitteln abgewickelt wird, auf welchen die Verstärkung aufgewickelt ist;
b. die Mehrzahl an Verstärkungen gemeinsam einer Wärmebehandlung unterzogen wird;
c. die Mehrzahl an Verstärkungen, welche aus dem Schritt des Wärmebehandeln stammt, einem Schritt zugeführt wird, in welchem die Mehrzahl an Verstärkungen in eine elastomerartige Zusammensetzung eingetaucht wird, um eine verstärkte Gürtellage zu erhalten.

## Claims

1. A method for manufacturing a reinforced ply comprising an elastomer composition and at least one metallic reinforcing element, wherein said reinforcer is subjected to at least the following successive steps:
a. The reinforcer is unwound from storage means on which the reinforcer is wound;
b. The reinforcer resulting from the unwinding step is heat treated under temperature and time conditions such that T+13.7.ln(t)>175, where T is the treatment temperature in C° and t is the time for which the reinforcer is kept at the temperature T in seconds;
c. The reinforcer resulting from the heat treatment step is fed into a step in which said reinforcer is embedded in an elastomer composition in order to obtain a reinforced ply.

2. The method as claimed in the preceding claim, wherein step b) is carried out under temperature and time conditions such that T+28.4.ln(t)<398.

3. The method as claimed in any one of the preceding claims, wherein the treatment time of step b) is within an interval ranging from more than 0 to less than 60 s, preferentially from more than 0 to less than 20 s, very preferentially from more than 0 to less than 5 s, and preferably 0 to 2 s.

4. The method as claimed in the preceding claim, wherein the temperature is within an interval ranging from 130 to 400°C.

5. The method as claimed in any one of claims 1 and 2, wherein the heat treatment time is within an interval ranging from more than 0 to less than 5 s and the temperature is within an interval ranging from more than 200 to 400°C.

6. The method as claimed in claim 1, wherein the treatment time of step b) is within an interval ranging from more than 0 to less than 20 s, where T is less than or equal to 300°C if the treatment time is less than 2 s, and T-23.8.ln(t)<315 for a treatment time ranging from 2 to less than 20 s.

7. The method as claimed in any one of the preceding claims, wherein steps a) to c) take place continuously, step b) being performed on a continuously travelling portion of reinforcer.

8. The method as claimed in the preceding claim, wherein the reinforcer travels at a speed of between 5 and 120 m/min, preferentially between 10 and 80 m/min.

9. The method as claimed in any one of the preceding claims, in which the metallic reinforcer is a single metallic filamentary element.

10. The method as claimed in any one of claims 1 to 8, wherein the metallic reinforcer is an assembly of a plurality of metallic filamentary elements assembled together in a helix.

11. The method as claimed in any one of claims 9 and 10, wherein the diameter of the metallic filamentary element ranges from 0.05 mm to 0.60 mm.

12. The method as claimed in claim 9, wherein the diameter of the metallic filamentary element ranges from 0.18 mm to 0.45 mm.

13. The method as claimed in any one of the preceding claims, wherein the metallic reinforcing element is not coated with a polymer composition prior to step c).

14. The method as claimed in any one of the preceding claims, wherein the elastomer composition used in step c) predominantly comprises a diene elastomer selected from the group consisting of natural rubber, synthetic polyisoprene or a mixture thereof.

15. The method as claimed in any one of the preceding claims, wherein:
a. A plurality of reinforcers is unwound from a plurality of storage means on which the reinforcer is wound;
b. The plurality of reinforcers is collectively heat treated;
c. The plurality of reinforcers resulting from the heat treatment step is fed into a step in which said plurality of reinforcers is embedded in an elastomer composition in order to obtain a reinforced ply.
